# EUROPEAN PATENT APPLICATION

(11) **EP 3 242 292 A1**
(43) Date of publication of application: **08.11.2017**
(21) Application number: 16168377.6
(22) Date of filing: 04.05.2016
(51) Int. Cl.: G10K 11/16, F01N 1/06, F01N 1/08, F01N 1/10, F01N 1/16, F01N 1/24, F24F 13/24, F16L 55/027, F16L 55/033, G10K 11/175, G10K 11/178

(54) **A SOUND DAMPING DEVICE**

(71) Applicant: Sontech International AB, 196 37 Kungsängen (SE)
(72) Inventor: Corin, Ralf, 133 36 Saltsjöbaden (SE)
(74) Representative: Stein, Jan

(57) **Abstract**

A sound damping device comprises a first flow channel device (4) and a second flow channel device (6) separated from one another with an intermediate wall (8; 8a, 8b, 8c, 8d, 8e), said intermediate wall being at least partly provided with a sound attenuating means (9), wherein said first flow channel device (4) has a first inlet (5a) and a first outlet (5b) for a first flow and said second flow channel device (6) has a second inlet (7a) and a second outlet (7b) for a second flow. In accordance with the invention, at least said first flow channel device (4) is configured and adapted in such a way that a dynamic pressure difference is created over said sound attenuating means (9) with respect to the second flow channel device (6).

## Description

### BACKGROUND OF THE INVENTION

The present invention relates to a sound damping device comprising a first flow channel device and a second flow channel device separated from one another with an intermediate wall, said intermediate wall being at least partly provided with a sound attenuating means, wherein said first flow channel device has a first inlet and a first outlet for a first flow and said second flow channel device has a second inlet and a second outlet for a second flow.

Such a sound damping device is known from WO 2006/098694.

Different kinds of sound attenuating means in the form of micro-perforations are disclosed in DE 197 30 3555 and WO 97/27370. More particularly, DE 197 30 3555 discloses sound attenuating means provided with micro-perforations in the form of circular holes, while WO 97/27370 discloses sound attenuating means provided with micro-perforations in the form of micro-slits.

In US 2 043 416, a sound damping device for a single flow channel is disclosed, including i.a. a microphone and a loudspeaker.

### OBJECT OF THE INVENTION

The object of the invention is to provide an improved silencing of ducts.

### SUMMARY OF THE INVENTION

This object has been achieved by the sound damping device as initially defined, wherein at least said first flow channel device is configured and adapted in such a way that a dynamic pressure difference is created over said sound attenuating means with respect to the second flow channel device.

Hereby is achieved an improved sound attenuation in ducts with hot or cold flowing gaseous fluids, i.e. gases or liquids or a mixture thereof, such as ventilation ducts or ducts for exhaust gases, or ducts for transportation of solid materials, such as vacuum or pressure ducts for transportation of grains or waste disposal bags.

Preferably, said first flow channel device is longer or shorter than the second channel in order to passively create said pressure difference over the sound attenuating means of said intermediate wall. The length of the flow paths will be of different lengths, and hereby different pressures will prevail in the first and second channel devices, such that sound attenuation is achieved over the sound attenuation means.

Suitably, at least one of said first flow channel device and second flow channel device is provided with a pressure influencing means to actively influence the dynamic pressure of the first flow channel device to a predetermined level for creating said pressure difference over the sound attenuating means of said intermediate wall. Hereby, it is possible to actively influence the pressure in one or both of the flow channel devices, such that sound attenuation is achieved over the sound attenuation means.

Suitably, said pressure influencing means is provided with a control device for controlling the dynamic pressure of said first flow channel device. Hereby, the pressure can be actively and automatically controlled.

Preferably, said control device is associated with a sensor means provided with a pressure influencing means for changing the pressure of said first flow in response to said sensor. Hereby, the control means is provided with an input signal.

Suitably, said sensor means is arranged at or in said first channel device. Alternatively, or in addition said sensor means is arranged at or in said second channel device. Hereby is achieved a possibility to control the pressure in one or both of the channel devices.

Preferably said pressure influencing means is a fan device, said sensor means being a pressure sensor, the speed of the fan being controlled in response to said pressure sensor.

Alternatively, or in addition, said pressure influencing means is a loudspeaker, said sensor means being a microphone, the sound volume of said loudspeaker being adjustable in response to said microphone.

Suitably, said control means comprises a computer.

Preferably, said sound attenuating means comprises a micro-perforated sound absorbing element.

Suitably, the air flow resistance of the sound attenuating means is in the range 10 - 10 000 Rayls_{MKS}, more preferably in the range 100 - 1000 Rayls_{MKS}, even more preferably 300 - 500 Rayls_{MKS}, while the optimal air flow resistance is 400 Rayls_{MKS}.

Preferably, said micro-perforated sound absorbing element is a sheet or plate provided with micro-slits.

Alternatively, the micro-perforated sound absorbing element is a sheet or plate provided with through holes, the through holes having e.g. a circular, triangular, polygonal cross-section. Alternatively, the through holes may have the shape of a truncated cone or may have a waist-shaped configuration.

Suitably, the thickness of the sheet or plate is in the range 10⁻¹⁰m - 2 mm, more preferably 10-⁹ m - 1 mm, even more preferably 10⁻⁸m - 0,9 mm.

According to other alternatives, the micro-perforated sound absorbing element may comprise materials such as wovens, nonwovens , textiles, sintered material, such as sintered PTFE-films (e.g. Gore-Tex ®), or nano-porous materials with defined air-flow resistance.

### DRAWING SUMMARY

In the following, the invention will be described in further detail by reference to the accompanying drawings, in which
Fig. 1A is a schematic cross-section of a passive sound damping device including a sound attenuating means;
Fig. 1B is an enlargement of the portion IB in Fig. 1A;
Fig. 2A illustrates a sound attenuating means;
Fig 2B is an enlargement of the sound attenuating means shown in Fig. 2b;
Fig 2C is a cross-section along line IIC-IIC in Fig 2B;
Fig 3A-B is a schematic cross-section of an alternative passive sound damping device;
Fig 3C is a schematic cross-section of an active sound damping device;
Fig 4A is a schematic cross-section of another alternative passive sound damping device;
Fig 4B is a schematic cross-section of another active sound damping device;
Fig. 5A is a schematic cross-section of an alternative active sound damping device utilising a controllable fan;
Fig. 5B is a schematic cross-section of an alternative active sound damping device utilising a pair of controllable fans;
Fig. 6A is a schematic cross-section of an alternative sound damping device utilising an active loudspeaker;
Fig. 6B is a schematic cross-section of an alternative sound damping device utilising a pair of active loudspeakers;
Fig. 7A is a schematic cross-section of an alternative sound damping device utilising a controllable fan;
Fig. 7B is a schematic cross-section of an alternative sound damping device utilising a pair of controllable fans;
Fig. 8A is a schematic cross-section of an alternative sound damping device utilising a controllable fan as well as an active loudspeaker; and
Fig. 8B is a schematic cross-section of an alternative sound damping device utilising a pair of controllable fans and a pair of active loudspeakers.

### DETAILED DESCRIPTION

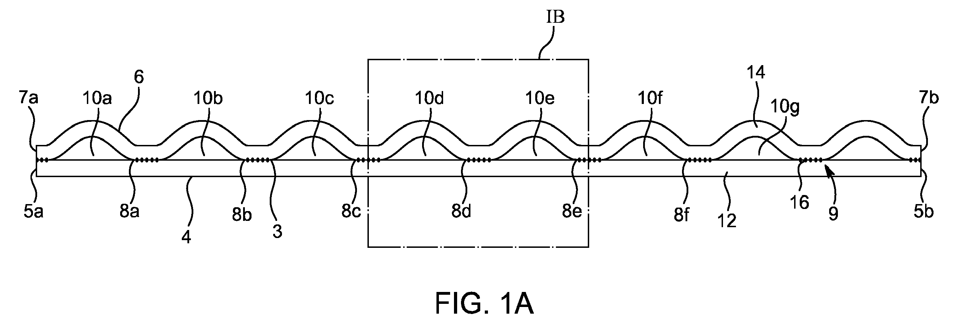

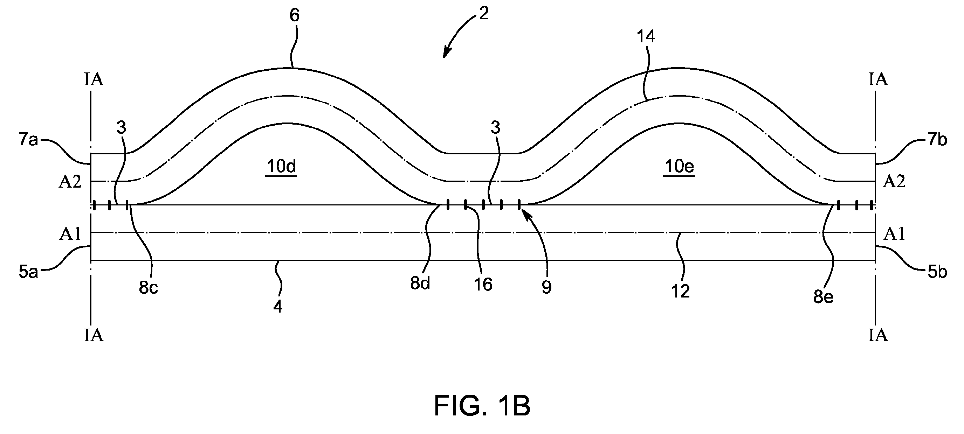

Figs. 1A and 1B shows a sound damping device 2, comprising a first flow channel device 4 having a first inlet 5a and a first outlet 5b, and a second flow channel device 6 having a second inlet 7a and a a second outlet 7b. The first flow channel device 4 is straight, while the second flow channel device 6 is curved in such a way that the second flow channel device 6 and the first flow channel device 4 have portions of a contact region 3 including an intermediate wall 8a, 8b, 8c, 8d, 8e, respectively, while the second flow channel device 6 does not contact the first flow channel device 4 between the intermediate walls 8a, 8b, 8c, 8d, 8e, i.e. at non-contact regions 10a, 10b, 10c, 10d, 10e etc.

The portions of a contact region 3 including an intermediate wall 8a, 8b, 8c, 8d, 8e is according to this embodiment at least partly constituted by a sound attenuating means 9. At non-contact regions 10a, 10b, 10c, 10d, 10e etc., there is a distance between the first and second channels 4, 6.

In Fig 1B is shown the centre axis A1 for the first flow channel device 4 along its longitudinal extension and the centre axis A2 for second flow channel device 6 along its longitudinal extension, thus also indicating the first and second flow paths 12, 14 of the first and second flow channel devices 4, 6, respectively. Thus, as a result of the configuration of the first and second flow channel devices 4, 6, the second flow path 14 is longer the first flow path 12. The first and second flow channels devices 4, 6, have substantially the same cross-section across their respective longitudinal extension.

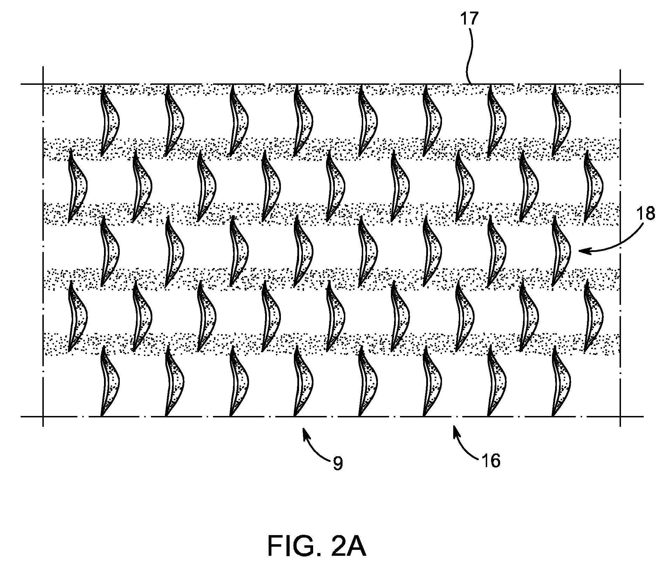

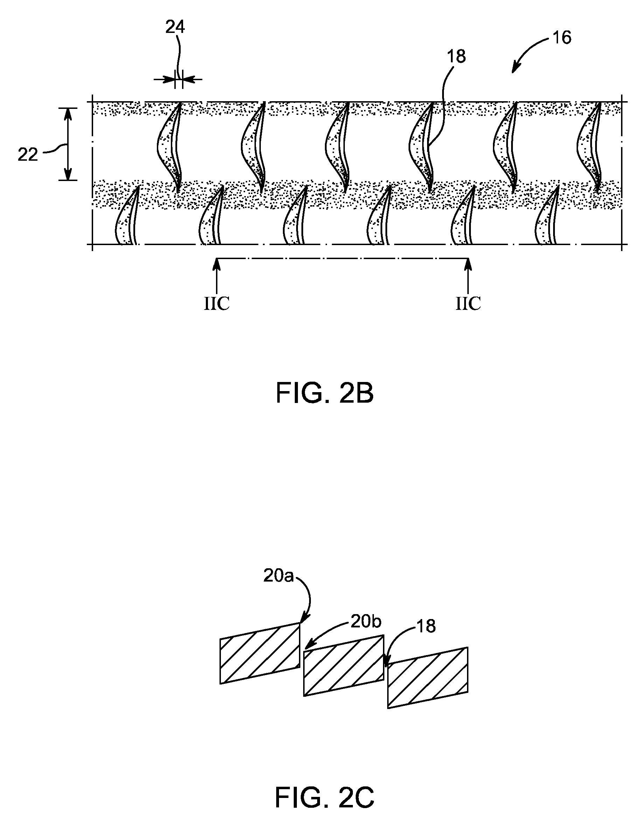

In Figs. 2A - 2C, a sound attenuating means 9 is shown in the form of a micro-perforated sound absorbing element 16. According to this variant, the micro-perforated sound absorbing element 16 comprises a sheet or plate 17 of plastic or metal, such as stainless steel or aluminium provided with micro-slits 18. The air flow resistance of the micro-perforated sound absorbing element 16 is optimally 400 Rayls_{MKS}, but is preferably in the range 10 - 10 000 Rayls_{MKS}, more preferably in the range 100 - 1000 Rayls_{MKS}, even more preferably 300 - 500 Rayls_{MKS}.

The thickness of the sheet or plate 17 is in the range 10⁻¹⁰m - 2 mm, more preferably 10⁻⁹m - 1 mm, even more preferably 10⁻⁸m - 0,9 mm.

The micro-slits 18 are of the sound absorbing element are preferably made by cutting the sheet or plate 17 by means of a knife roll having a wavy shape against another edge, hereby resulting in a first slit edge 20a and a second slit edge 20b partly pressed out of the material plane. Subsequently, the first and second slit edges 20a, 20b are pressed back by a subsequent rolling operation. Hereby, micro-slits 18 of a predetermined length 22 and predetermined width 24 are created. The width 24 is preferably in the range 10⁻¹⁰ -10⁻³m.

Cutting may instead be performed by use of laser or a water jet cutter.

A fluid flow, e.g. by a liquid, such as water, or a gas, such as air in the first and second flow channel devices 4, 6 will create noise. The noise may in addition be created by use of a pump or a fan connected to one or both of the channels 4, 6, e.g. in a ventilation system or a water in a water cooling system of a ventilation system. The noise may alternatively be created by use of a pump or a fan or a compressor or a combustion engine

The different flow lengths 12, 14 will create a phase shift between the flow of the first flow channel device 4 and flow of the second flow channel device 6. The phase shift of the flows on either sides of the micro-perforated sound absorbing element 16 will cause a loss of energy, in turn damping the noise transported by the flows.

It should be noted that it is immaterial whether the flow of the first flow channel device 4 and flow of the second flow channel device 6 are substantially counter directed or directed in substantially the same direction at the sound absorbing element.

It should also be noted that instead of micro-slits 18 the micro-perforated sound absorbing element 16 may be provided with substantially circular through-holes, having a diameter of 10⁻¹⁰ -10⁻³m_{.}

It should also be noted that the number of intermediate walls 8a, 8b, 8c, 8d, 8e including a micro-perforated sound absorbing element 16 etc. could be as few as a single one, or as many as one hundred or more.

Maximum sound damping for a particular frequency is achieved if the phase shift of a particular frequency in the first and the second flow channel devices 4, 6 on either sides of the micro-perforated sound absorbing element 16 is half of a wave-length (λ/2) for parallel portions of the flow channels 4, 6, where a parallel grazing sound direction will extend at the micro-perforated sound absorbing element 16.

While using the formula λ = speed of sound / frequency:
For f = 500 Hz
λ = 340 m/s / 500 Hz = 0,68 m = 68 cm

Thus, for 500 Hz, maximum sound damping is achieved for
λ/2 = 34 cm
For f = 5000 Hz
λ = 340 m/s / 5000 Hz = 0,068 m = 68 mm

Consequently, for 50 Hz, maximum sound damping is achieved for
λ /2 = 34 mm.

Consequently, in order to achieve maximum sound damping for the embodiment of Figs 1A-1B, the flow paths 12, 14 of the first and second flow channel devices 4, 6 should be such that the second flow path 14 along the central axis A2 of the second flow channel device 6, and from the first intermediate wall 8a to the second intermediate wall 8b (or the second intermediate wall 8b to the third intermediate wall 8c etc.) is in the range 34 mm - 34 cm longer than the first flow path 12 along the axis A1 of the first flow channel device 4.

In this connection, it should be noted that a spiral configuration (such as two rolled sheets) would not be suitable, since it would not only cause damping at half a wave-length (λ/2) but also amplification at one wave length (λ).

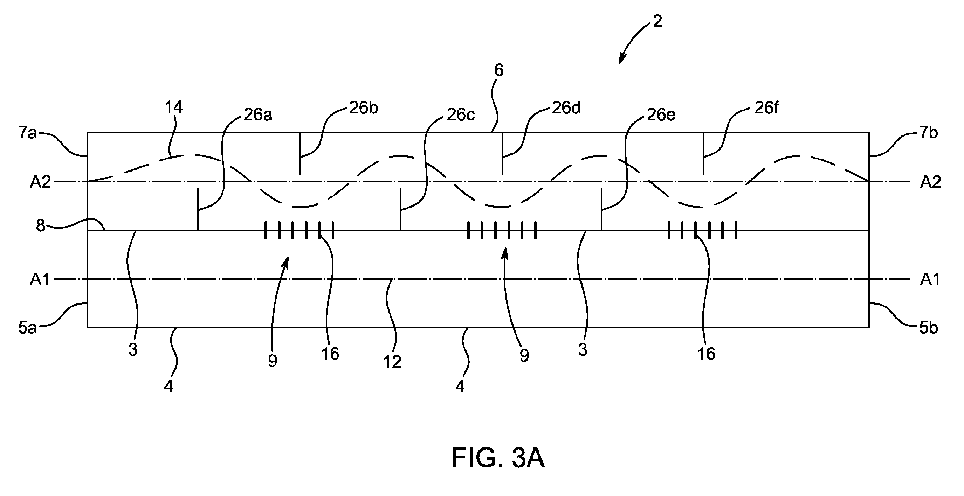

Fig. 3A shows an alternative passive sound damping device 2, comprising a first flow channel device 4 and a second flow channel device 6. The exterior of the first and second flow channel devices 4, 6 are straight and parallel. Also the axes A1 and A2 are straight. However, the interior of the second flow channel device 6 is provided with baffles 26a, 26b, 26c, 26d, 26e, 26f, causing the flow of the second flow channel device 6 to take a second flow path 14, said second flow path 14 being longer than the first flow path 12, along the axis A1.

The intermediate wall 8 of first and second flow channel devices 4, 6 is provided with the baffles 26a, 26c, 26e. Between the baffles 26a, 26c, 26e a micro-perforated sound absorbing element 16 is provided. By placing the baffles 26a - 26f at predetermined distances from one another, or by moving them in relation to one another during operation of the source of noise, it is possible to reduce noise over the micro-perforated sound absorbing element 16 in accordance with what is explained in connection with figures 1A - 2C.

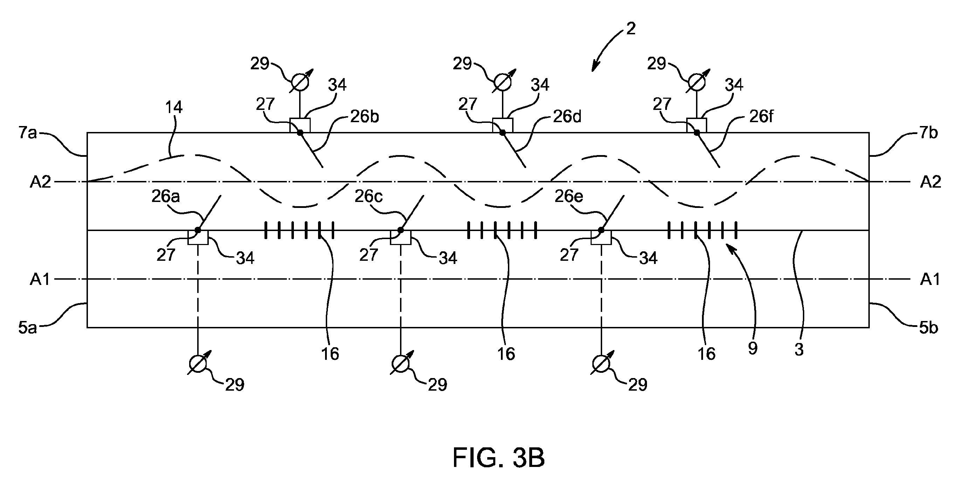

In Fig. 3B is shown an alternative passive sound damping device 2, according to which one or a plurality of the baffles 26a - 26f are pivotable about a hinge 27 by means of an electric motor or step motor substantially across the axis A2 of the second flow channel device 6b. A potentiometer 29 is connected to each motor or step motor 34 such that they motors can be operated individually by manually turning the potentiometers 29. Alternatively, a plurality of electric motors or step motors 34 may be connected to a common potentiometer 29, hereby allowing them to be operated together.

Alternatively, the baffles 26a-26f may instead of an electric motor or step motor 34 be provided with a handle for manual operation.

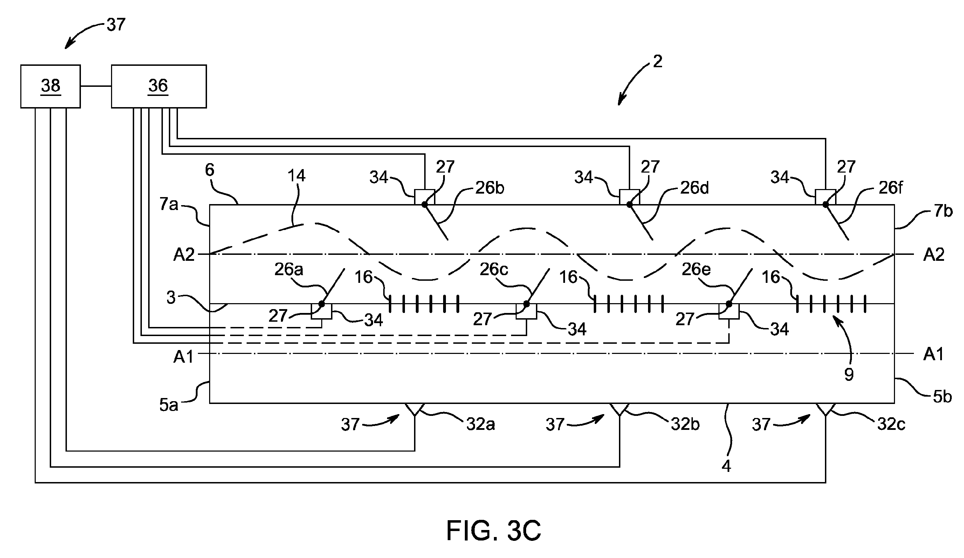

In Fig. 3C is shown an alternative solution including an active sound damping device 2. A sensor device 37, including three microphones 32a, 32b, 32c connected to the first flow channel device 4. and a sensor unit 38 connected to a computer 36. The electric motors or step motors 34 of each baffle 26a - 26f are controlled individually, group-wise or all in common by said computer 36. Hereby, the baffles are controlled by the computer 36 in response to the microphones 32a - 32c to take a position where the sound damping is optimal over the micro-perforated sound absorbing element 16, i.e. where the noise sensed by the microphones 32a - 32c is as low as possible.

The number of microphones 32 may be less than three, i.e. one or two, or more than three, i.e. four, five or any number depending on the length of the first and second flow channel devices 4, 6. As explained above, the noise reduction is achieved by created a pressure difference over the micro-perforated sound absorbing element 16.

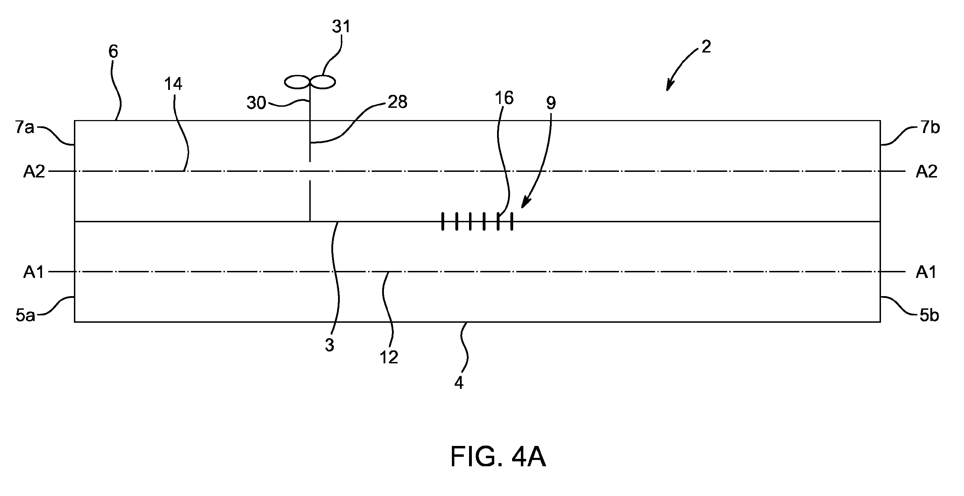

Fig. 4A shows an alternative passive sound damping device 2, comprising a first flow channel device 4 and a second flow channel device 6. The exterior of the first and second flow channel devices 4, 6 are straight and parallel, and so are the axes A1, A2 and the flow paths 12, 14.

However, the second flow channel device 6 is provided with a fixed or manually adjustable flow restriction 28 coaxially with the axis 12 before or after the sound attenuating means 9 depending on the direction of flow.

After the fixed or manually adjustable flow restriction 28, as seen in the flow direction, the speed of the will be higher than before the flow restriction 28. Furthermore, the flow restriction 28 will cause a pressure drop due to the entry loss at the abrupt contraction.

By using a set of parts of fixed flow restrictions of different sizes of the flow opening, it will be possible to adjust the pressure drop by exchanging to a part having another fixed flow restriction. The result will be different degrees of sound damping depending on the flow restriction used. The sound damping as such depends on the created pressure difference between the second flow path 14 in relation to the first flow path 12 over the micro-perforated sound absorbing element 16.

Alternatively, by using a manually adjustable flow restriction 28, such as an iris connected to a shaft 30 provided with a grip or handle 31, it will be possible to adjust the flow opening of the flow restriction 28 by turning the grip or handle 31 until a desired damping is achieved over the micro-perforated sound absorbing element 16.

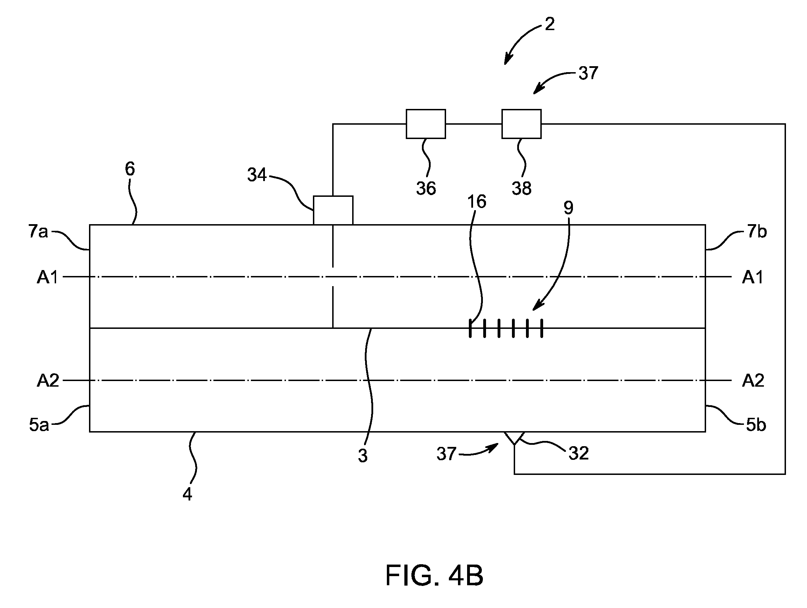

Fig. 4B shows the sound damping device 2 of Fig. 4A, however including an active sound damping device 2 in the form of a computer 36 controlled adjustable flow restriction 28, such as an iris, the iris being connected to a shaft 30. The shaft 30 is turned by a step motor 34 controlled by computer 36.

A sensor device 37, comprises a microphone 32 connected to the outside of the second flow channel device 4 adapted to sense the sound of the channels 4, 6 and a sensor unit 38 connected to the computer 36. The size of the flow opening of the flow restriction 28 is adjusted by means of the step motor 34, in response to the microphone 32 until the sensed noise is as low as possible, e.g. regarding a particular frequency or frequency range. Again, the noise reduction is achieved by creating a pressure difference over the micro-perforated sound absorbing element 16.

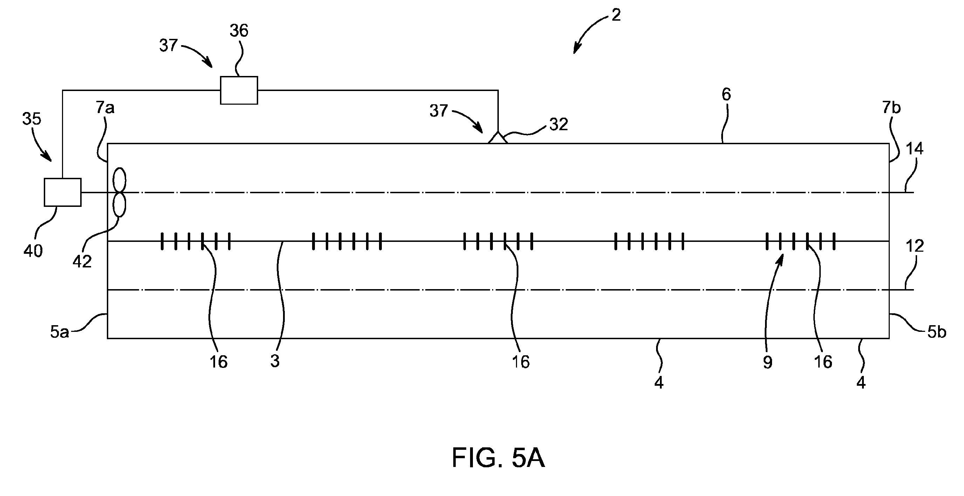

Fig. 5A shows another alternative active sound damping device 2, comprising a first flow channel device 4 and a second flow channel device 6. The exterior of the first and second flow channel devices 4, 6 are straight and parallel, and so are interior of the first and second flow paths 12, 14.

A pressure influencing means 35 is provided in the form of a fan device 39 comprising an electric fan motor 40 driving a fan 42 is arranged inside the second flow channel device 6.

In the intermediate wall 8 of the first and second channel devices 4, 6 a plurality micro-perforated sound absorbing elements 16 are provided at equal distances from one another.

By means of the fan 42, the air speed inside the second channel 6 will be faster than the air speed inside the first channel 4. The differences in air speed in the channels 4, 6 create in turn pressure differences over the micro-perforated sound absorbing element 16, such that noise in the channels 4, 6 is attenuated.

The microphone 32 connected to the outside of the second flow channel device 6 is adapted to sense the noise of the channels 4, 6. The sensed noise is analysed in a sensor unit 38 integrated in the computer 36 and controls the speed of the fan motor 40 by a suitable computer program.

By adjustment of the fan speed in response to the microphone 32, the noise in the flow channel devices 4, 6 is damped due to the created pressure difference over the micro-perforated sound absorbing element 16.

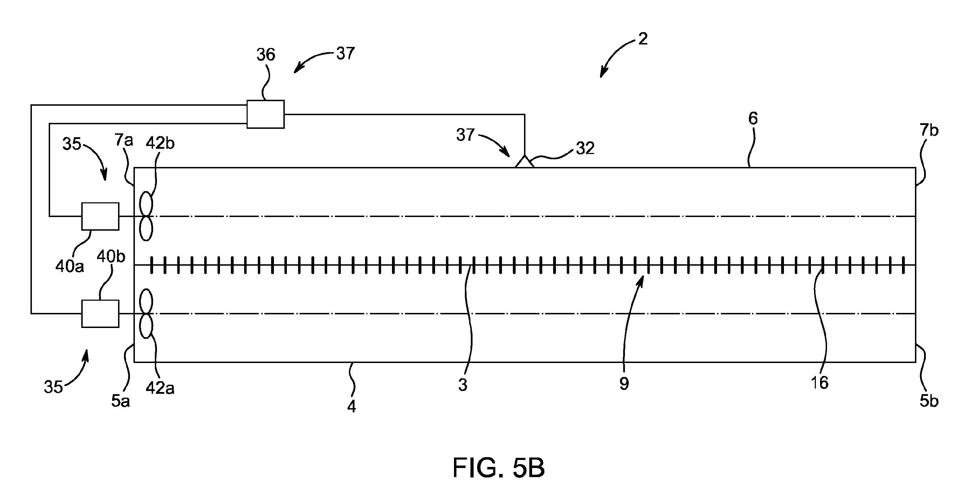

As shown in Fig. 5B, it is also possible by means of a computer 36 to individually control the speed of the motor 40a of a first fan 42a in the first channel device 4 and a the speed of a motor 40a of a second fan 42b in the second channel device 6 in response to a sound sensed by the microphone 32.

According to this embodiment, substantially the whole longitudinal extension of the contact region 3, i.e. the intermediate wall 8 of the first and second channel devices 4, 6, is provided with a micro-perforated sound absorbing element 16.

It should be noted that in the embodiments of Figs. 5A and 5B, the number of microphones 32 may be more than one, cf. Fig 3C above. Furthermore, the microphone or microphones 32 may instead be arranged at the first flow channel device 4.

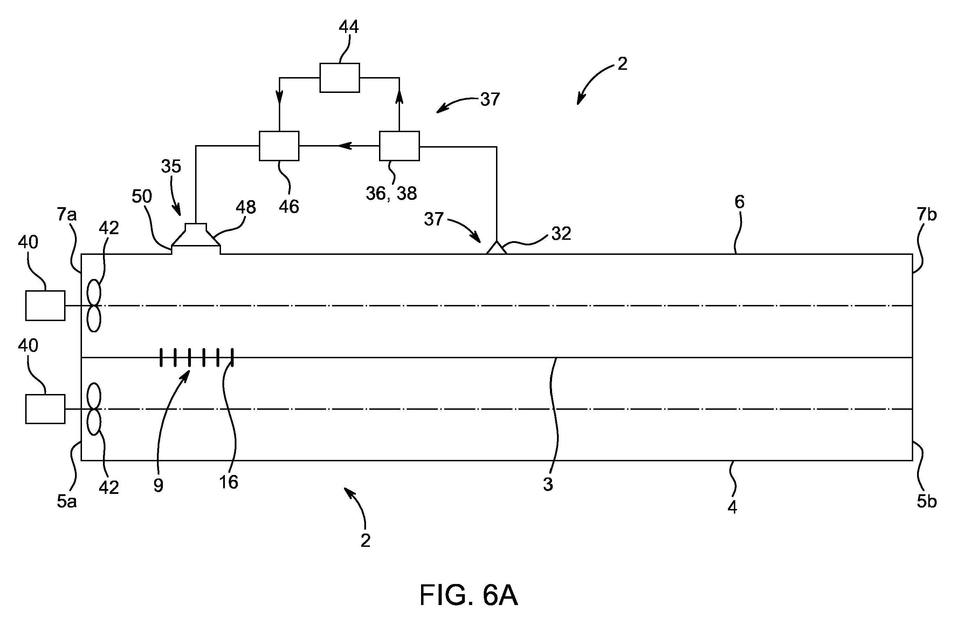

Fig. 6A shows another embodiment, according to which each flow channel device 4, 6 is provided with a fan 42 driven by a motor 40 at constant speed A microphone 32a is connected to the outside of the second flow channel device 6 and is adapted to sense noise of the channels 4, 6.

The microphone 32 is connected to a sensor unit of a computer 36, the computer in turn controlling a sound generator 44. The noise generated by the sound generator 44 is amplified by an amplifier 46 connected to a pressure influencing means 35 in the form of a loudspeaker 48 arranged in an opening 50 of the second flow channel device 6.

It should be noted that in this case, the fans 42 are in this case considered a source of noise only, and are not to be considered a pressure influencing means, since they are driven at constant speed. As explained above, the noise source may instead be a e.g. combustion engine not providing an air flow inside the first and second channel devices. In response to the noise sensed by the microphone 32, the sound generator 44 generates a noise with inverted phase to the sensed noise. The computer 36 also controls the volume level of the loudspeaker 48 in response to the noise sensed by the microphone 32.

This effect is generally called active noise reduction (ANC) or active noise reduction (ANR). According to the invention, this effect is enhanced by the micro-perforated sound absorbing element 16 arranged in the intermediate wall 8 of the first and second flow channel devices 4, 6. According to this embodiment, the micro-perforated sound absorbing element 16 is arranged in the area of the loudspeaker 48.

It should be noted that the microphone 32 may instead be arranged at the first flow channel device 4.

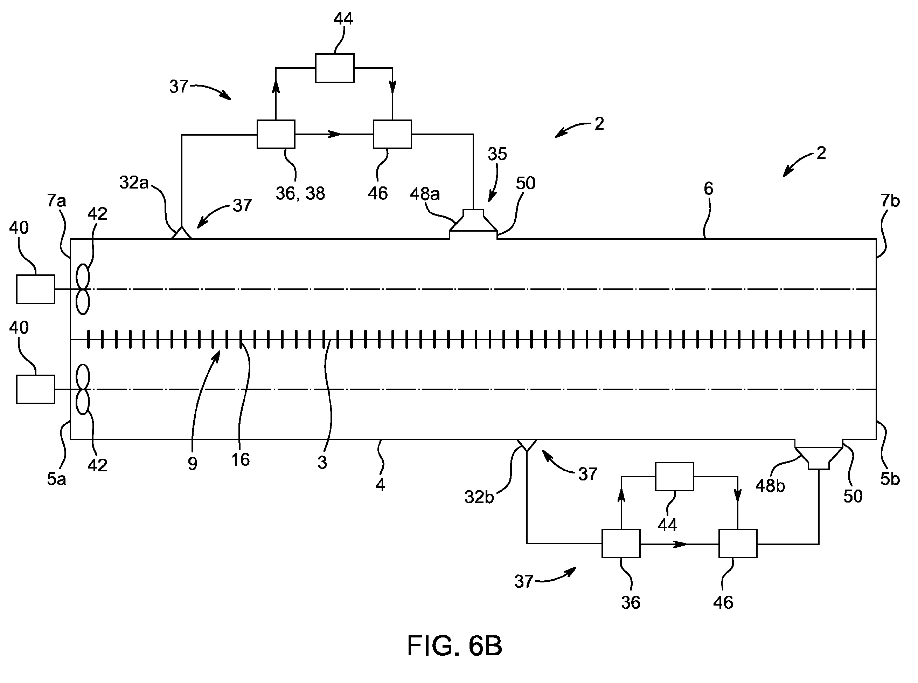

Compared to what is shown in Fig. 6A, the sound damping device 2 shown in Fig. 6B includes in addition to a first microphone 32a connected to the second flow channel device 6 a further microphone 32b connected to the first flow channel device 4. The microphones 32a, 32b are connected to the computer 36, controlling the sound generator 44, the sound of which being amplified by an amplifier 46 connected to the loudspeakers 48a, 48b at an opening 50 arranged in the second flow channel device 6 and in the first flow channel device 4, respectively.

The micro-perforated sound absorbing element 16 arranged in the intermediate wall 8 of the first and second flow channel devices 4, 6 is according to this embodiment arranged along substantially the whole longitudinal extension of the first and second flow channel devices 4, 6.

In Fig. 6B the left microphone 32a, arranged at the second flow channel 6, may instead be arranged at the first flow channel 4, while the speaker 48a remains in the second flow channel device 6. Likewise, the microphone 32b arranged at the first flow channel 4, may be arranged at the second flow channel device 6, while the speaker 48b remains in the first flow channel device 4.

Also in the case of Figs. 6A and 6B, the number of microphones may be more than one, cf. Fig 3C above.

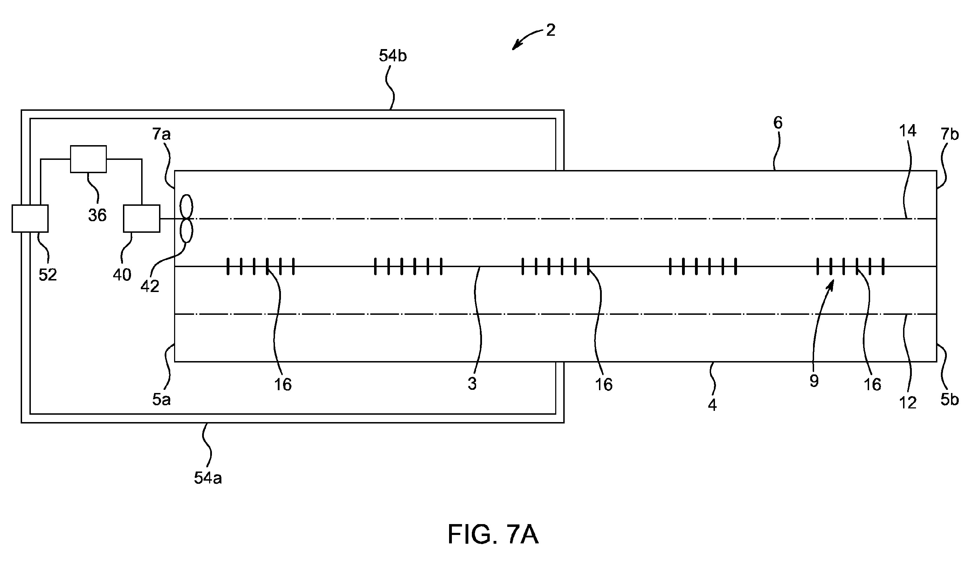

In the embodiment of Fig. 7A, a pressure sensor 52 is connected via a first tubing 54a to the first flow channel device 4 and via a second tubing 54b to the second flow channel device 6.

The pressure difference between the first flow 12 and the second flow 14 sensed by the pressure sensor 52 is analysed in computer 36. The computer controls the motor 40 of the fan 42 such that a predetermined pressure difference is achieved to reduce noise in the first and second flow channel devices 4, 6 by means of the micro-perforated sound absorbing element 16.

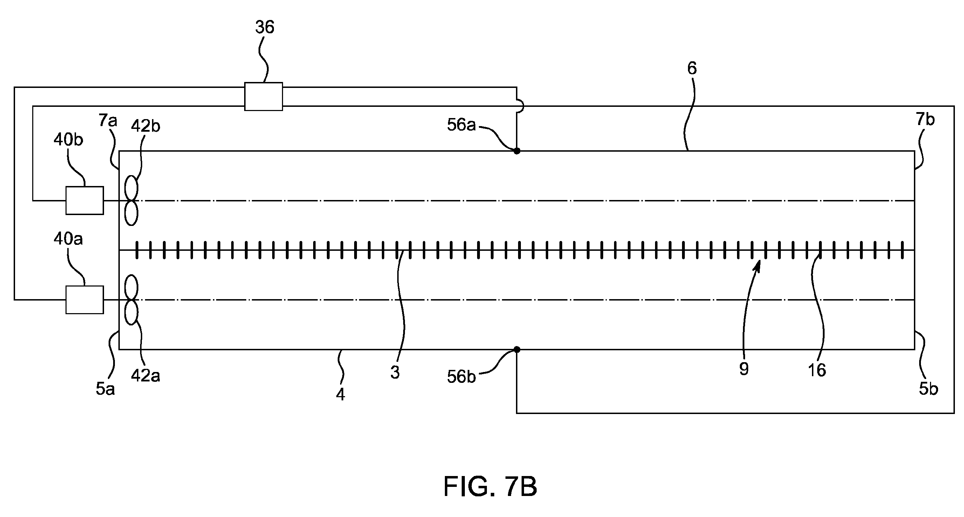

In the embodiment of Fig. 7B, each flow channel device 4, 6 is provided with a fan 46a, 46b, the motor 40a, 40b of which being individually controllable by the computer 36 in response to a pressure transducer 56a, 56b to the interior first and second flow device 4, 6, respectively.

The motors 40a, 40b including the fans 42a, 42b are individually controlled by the computer 36 to create a predetermined pressure difference such that noise in the first and second flow channel devices 4, 6 is reduced by means of the micro-perforated sound absorbing element 16.

In the embodiments of Figs. 3C, 4B, 5A, 5B, 6A and 6B it has been described that the microphone 32 is to be connected to the outside of the flow channel device 6. However the microphone 32 may instead be arranged inside the flow channel device 6. Alternatively, the microphone 32 may be mounted inside or connected to the outside of the first flow channel device 4. The microphone 32 may instead be arranged at a distance from the first and second flow channel devices 4, 6.

Furthermore, it has been shown that the microphones 32 are positioned opposite to the micro-perforated sound absorbing element 16 where such an element has a limited extension. The microphones may however be placed somewhere else along the first and/or second flow channel devices 4, 6.

Of course, the loud speaker 48 could be mounted to the flow channels directly towards the wall rather than at an opening.

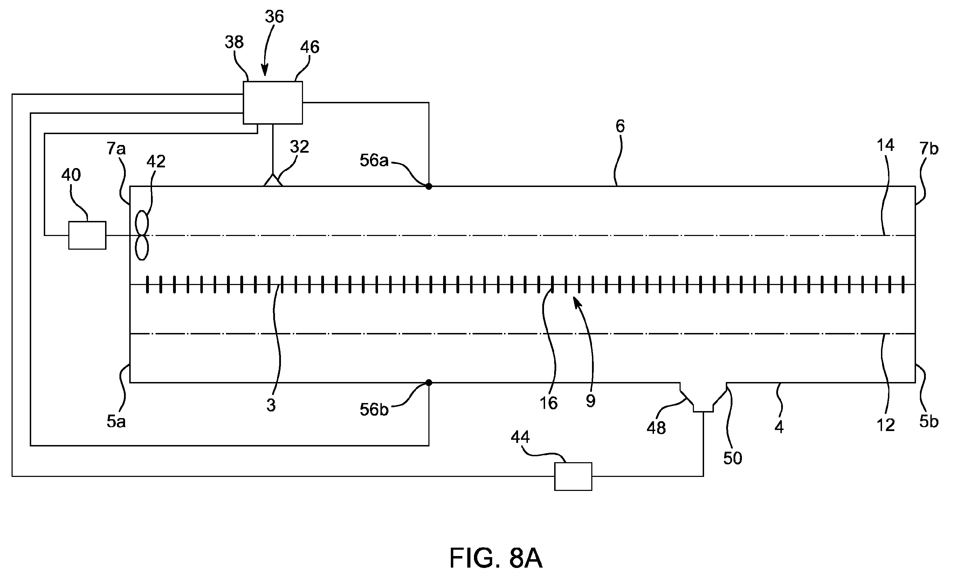

As shown in Fig. 8A pressure transducers 56a, 56b sense the dynamic pressure difference in the first and second flow channel devices 4, 6 and a microphone 32 senses the noise level thereof.

Furthermore, the sensor unit 38 is integrated in the computer 36. Likewise, the 44 is integrated in the computer.

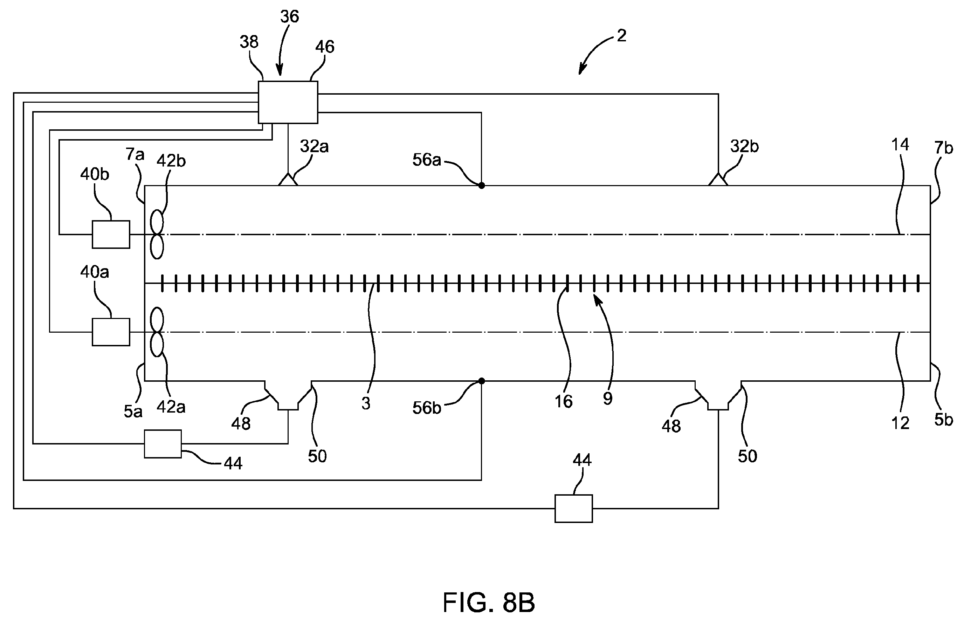

As shown in Fig 8B, each flow channel device 4, 6 is provided with a fan 42a, 42b, the motor 40a, 40b of which being individually controllable by the computer 36 in response to a pressure transducer 56a, 56b to the interior first and second flow device 4, 6, respectively.

Furthermore, two microphones 32a, 32b connected to a computer 36, the latter controlling the sound generator 44, the signal thereof being amplified by an amplifier 46 connected to a loudspeaker 48 at an opening 50 arranged in the first flow channel device 4.

The micro-perforated sound absorbing element 16 arranged in the intermediate wall of the first and second flow channel devices 4, 6 is according to the embodiment of Figs 8A and 8B arranged along substantially the whole longitudinal extension of the first and second flow channel devices 4, 6.

Sensing the pressure difference over the micro-perforated sound absorbing element 16 by means of the pressure transducers 56a, 56b and and at the same time sensing the noise by uses of a microphone 32 (Fig 8A) or microphones 32a, 32b (Fig 8B), it will be possible to create a data base of experience values for different operating modes. Hereby, a quick adjustment of the sound damping for different operating modes is achieved.

The sound damping device 2 may be mounted in an existing or a prospected single duct, the first and second inlets 5a, 7a and the first and second outlets 5b, 7b being connected to a cut-off part of said existing single duct. Alternatively, the sound damping device 2 may be mounted in a corresponding manner in an existing or prospected double duct, the first and second inlets 5a, 7a and the first and second outlets 5b, 7b being connected to the channels of the double duct.

The direction of first flow 12 and the second flow 14 may be the same or substantially the same. Alternatively, the direction of said first flow 12 and said second flow 14 may be reversed or substantially reversed.

In all the above described embodiments, the intermediate wall may be a common single wall or a common double wall.

Furthermore, in all the above described embodiments, the sound attenuating means 9 is in the form of a micro-perforated sound absorbing element 16 as discussed in connection with Figs 2A - 2C, including the proposed alternatives.

In case the micro-perforated sound absorbing element 16 is provided with micro-slits, the slits may be positioned across or parallel to or at any angle in relation to the elongation of the axes A1, A2.

The length 22 of the micro-slits 18 may be as small as 10⁻¹⁰ m, but may depend on the size of the sheet 17. In the embodiment shown in Figs 6B and 7B, 8A, and 8B, the length 22 of the micro-slits 18 may extend along the whole length of the flow channel devices 4, 6. Thus, the length 22 of the micro-slit 18 may be several meters.

It should be noted that it would be possible to arrange the micro-perforated sound absorbing element 16 along substantially the whole longitudinal extension of the first and second flow channel devices 4, 6 of Figs. 3A - 5A and 6A as well. Likewise, arranging the micro-perforated sound absorbing element 16 in the manner shown in Figs. 3A - 5A and 6A would be possible also in the embodiments of Figs 6B and 7B, 8A, and 8B. In that case, the length 22 of the micro-slits 18 is limited by the size of the micro-perforated sound absorbing element 16. The latter also relates to the embodiment of Figs. 1A and 1B.

It should be noted that the length 22 and width 24 of the micro-slits 18 is chosen in combination with the number of slits (or any other kind of the above described micro-perforations), in such a way that micro-perforated sound absorbing element 16 has perforation degree with the above described range of air flow resistance.

### Reference signs used

- 2: Sound damping device
- 3: Contact region
- 4: First flow channel device
- 5a: First inlet
- 5b: First outlet
- 6: Second flow channel device
- 7a: Second inlet
- 7b: Second outlet
- 8, 8a, 8b, 8c, 8d, 8e etc.: Intermediate wall
- 9: Sound attenuating means
- 10a, 10b, 10c, 10d, 10e etc.: Non-contact region
- 12: First flow path
- 14: Second flow path
- 16: Micro-perforated sound absorbing element
- 17: Sheet
- 18: Micro-slits
- 20a: First slit edge
- 20b: Second slit edge
- 22: Length
- 24: Width
- 26a - 26f: Baffle
- 27: Hinge
- 28: Flow restriction
- 29: Potentiometer
- 30: Shaft
- 31: Grip or handle
- 32, 32a, 32b, 32c: Microphone
- 34: Step motor
- 35: Pressure influencing means
- 36: Computer
- 37: Sensor device
- 38: Sensor unit
- 39: Fan device
- 40, 40a, 40b: Motor
- 42, 42a, 42b: Fan
- 44: Sound generator
- 46, 46a, 46b: Amplifier
- 48, 48a, 48b: Loudspeaker
- 50: Opening
- 52: Pressure sensor
- 54a, 54b: Tubing
- 56a, 56b: Pressure transducer

## Claims

1. A sound damping device comprising a first flow channel device (4) and a second flow channel device (6) separated from one another with an intermediate wall (8; 8a, 8b, 8c, 8d, 8e), said intermediate wall being at least partly provided with a sound attenuating means (9), wherein said first flow channel device (4) has a first inlet (5a) and a first outlet (5b) for a first flow and said second flow channel device (6) has a second inlet (7a) and a second outlet (7b) for a second flow, **characterised in that** at least said first flow channel device (4) is configured and adapted in such a way that a dynamic pressure difference is created over said sound attenuating means (9) with respect to the second flow channel device (6).

2. A sound damping device according to claim 1, wherein said first flow channel device (4) is longer or shorter than the second channel (6) in order to passively create said pressure difference over the sound attenuating means (9) of said intermediate wall (8; 8a, 8b, 8c, 8d, 8e).

3. A sound damping device according to claim 1 or 2, wherein at least one of said first flow channel device (4) and second flow channel device (6) is provided with a pressure influencing means (35) to actively influence the dynamic pressure of the first flow channel device (4) to a predetermined level for creating said pressure difference over the sound attenuating means of said intermediate wall (8).

4. A sound damping device according to claim 3, wherein said pressure influencing means (35) is provided with a control device (36) for controlling the dynamic pressure of said first flow channel device (4).

5. A sound damping device according to claim 4, wherein said control device (36) is associated with a sensor means (38, 52) provided with a pressure influencing means (35) for changing the pressure of said first flow in response to said sensor.

6. A sound damping device according to claim 5, wherein said sensor means (38, 52) is arranged at or in said first channel device (4).

7. A sound damping device according to claim 5, wherein said sensor means (38, 52) is arranged at or in said second channel device (6).

8. A sound damping device according to any one of claims 5 to 7, wherein said pressure influencing means (35) is a fan device (39), said sensor means being a pressure sensor (52), the speed of the fan being controlled in response to said pressure sensor (52).

9. A sound damping device according to any one of claims 5 to 8, wherein said pressure influencing means (35) is a loudspeaker (48), said sensor means being a microphone (32), the sound volume of said loudspeaker (48) being adjustable in response to said microphone.

10. A sound damping device according to claim 8 or 9, wherein said control means comprises a computer (36).

11. A sound damping device according to any one of the preceding claims, wherein said sound attenuating means (9) comprises a micro-perforated sound absorbing element (16).

12. A sound damping device according to any one of the preceding claims, wherein the air flow resistance of the sound attenuating means (9) is in the range 10 - 10 000 Rayls_{MKS}, more preferably in the range 100 - 1000 Rayls_{MKS}, even more preferably 300 - 500 Rayls_{MKS}.

13. A sound damping device according to claim 14, wherein said micro-perforated sound absorbing element (16) is a sheet or plate (17) provided with micro-slits (18).

14. A sound damping device according to claim 13, wherein the thickness of the sheet or plate (17) is in the range 10⁻¹⁰m - 2 mm, more preferably 10⁻⁹ m - 1 mm, even more preferably 10⁻⁸ m - 0,9 mm.
